# EUROPÄISCHE PATENTSCHRIFT

(11) **EP 1 395 630 B1**
(45) Veröffentlichungstag und Bekanntmachung des Hinweises auf die Patenterteilung: **24.08.2005**
(21) Anmeldenummer: 02745298.6
(22) Anmeldetag: 16.05.2002
(51) Int. Cl.: C08K 3/00, C08K 3/16, C08K 5/00, C08K 5/09, C08L 27/00

(54) **FEIN VERTEILTE STABILISATORZUSAMMENSETZUNG FÜR HALOGENHALTIGE POLYMERE**
FINELY DISTRIBUTED STABILIZING COMPOSITION FOR POLYMERS CONTAINING HALOGEN
COMPOSITION DE STABILISATEUR FINEMENT REPARTIE DESTINEE A DES POLYMERES HALOGENES

(30) Priorität: 21.05.2001 DE 10124734
(43) Veröffentlichungstag der Anmeldung: 10.03.2004
(73) Patentinhaber: Baerlocher GmbH, 85716 Unterschleissheim (DE)
(72) Erfinder: DR. FOKKEN, Stefan, 86485 Biberbach (DE); DR. HAUK, Juergen, 85354 Freising (DE); WEIGL, Manfred, 85551 Heimstetten (DE)
(74) Vertreter: Fiesser, Gerold Michael
(86) Internationale Anmeldenummer: PCT/EP2002/005416
(87) Internationale Veröffentlichungsnummer: WO 2002/094919

(56) Entgegenhaltungen:
- EP-A- 0 273 766
- EP-A- 0 457 471
- US-A- 5 190 700

## Beschreibung

Die vorliegende Erfindung betrifft eine Stabilisatorzusammensetzung für halogenhaltige Polymere, die ein Salz einer halogenhaltigen Oxysäure und eine anorganische oder organische Säure oder eine anorganische Base enthält. Weiterhin betrifft die vorliegende Erfindung ein Verfahren zur Herstellung derartiger Stabilisatorzusammensetzungen sowie halogenhaltige Polymere, die solche Stabilisatorzusammensetzungen enthalten.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird woraus ein verfärbter, ungesättigter Kunststoff mit farbgebenden Polyensequenzen resultiert.

Insbesondere bei Formkörpern, die Licht, wechselnden Temperaturen oder anderen äußeren Einflüssen ausgesetzt sind, kommt es mit zunehmender Gebrauchsdauer zu Veränderungen der Farbe und der Materialeigenschaften, die gegebenenfalls bis zur Unbrauchbarkeit des Formkörpers fortschreiten können.

Verschiedene Stabilisatorsysteme wurden vorgeschlagen, um halogenhaltige Polymere im Hinblick auf Langzeitschäden durch Einwirkung von Licht oder Wärme zu stabilisieren. So werden beispielsweise im Stand der Technik Systeme beschrieben, die Perchloratsalze zur Stabilisierung von halogenhaltigen Polymeren enthalten. Problematisch wirkt sich beim Einsatz von Perchloratsalzen jedoch aus, dass diese empfindlichen Oxidationsmittel sehr vorsichtig gehandhabt werden müssen. Aus diesem Grund bestehen seitens der Anwender gewisse Vorbehalte bezüglich des Einsatzes von Perchloratsalzen in Stabilisatorzusammensetzungen. Daher wurden verschiedene Lösungen vorgeschlagen wie solche perchlorathaltigen Stabilisatorzusammensetzungen im Hinblick auf ihre Handhabbarkeit verbessert werden können.

So beschreibt beispielsweise die EP-B 0 457 471 eine Stabilisatorzusammensetzung, die Perchlorat, Calciumsilikat und Calciumcarbonat enthält. Zur Herstellung der beschriebenen Stabilisatorzusammensetzungen wird eine wässrige Lösung von Natriumperchlorat mit Calciumsilikat oder einem Gemisch aus Calciumsilikat und Calciumcarbonat vermischt. Problematisch wirkt sich bei den beschriebenen Stabilisatorzusammensetzungen aus, dass sie immer noch relativ große Kristallite von Natriumperchlorat enthalten. Diese Kristallite können nach wie vor eine Gefahr bei der Handhabung darstellen. Darüber hinaus lassen sich derartige Stabilisatorzusammensetzungen nicht ausreichend homogen in einem halogenhaltigen Polymeren verteilen. Weiterhin schränkt das Vorliegen von Calciumsilikat die Stabilisatorwirkung im Vergleich zu anderen Calciumverbindungen ein. Darüber hinausweist Calciumsilikat eine hohe Mohs'sche Härte auf, wodurch Verarbeitungsanlagen dauerhaft geschädigt werden können.

Die DE 689 12 616 T2 offenbart pulverförmige Flammschutzmittel mit einem Gehalt an Antimonpentoxid für halogenhaltige Vinylharze. In der Druckschrift werden Zusammensetzungen für Flammschutzmittel beschrieben, die Natriumperchlorat sowie Hydroxide oder Salze eines Alkalimetalls beinhalten. Gemäß den Ausführungsbeispielen 2 bzw. 4 werden die beschriebenen Zusammensetzungen getrocknet und können anschließend in einer Stiftscheibenmühle vermahlen werden.

Die DE 696 04 880 T2 betrifft einen Stabilisator für halogenhaltige Harze und Verfahren zu deren Herstellung, eine Halogen-enthaltende Harzzusammensetzung und ein Verbundhydroxidsalz. Der Stabilisator für die halogenhaltigen Harze kann beispielsweise ein komplexes Hydroxidsalz einer Perchlorsäure und anorganische Metallhydroxide enthalten.

Es bestand daher ein Bedürfnis nach Stabilisatorzusammensetzungen, die ein Salz einer halogenhaltigen Oxysäure enthalten, wobei die Stabilisatorzusammensetzungen das Salz der halogenhaltigen Oxysäure in möglichst feiner Verteilung enthalten.

Der vorliegenden Erfindung liegt daher die Aufgabe zugrunde, derartige Stabilisatorzusammensetzungen und Verfahren zu ihrer Herstellung zur Verfugung zu stellen.

Gelöst werden die der Erfindung zugrundeliegenden Aufgaben durch eine Stabilisatorzusammensetzung und ein Verfahren zu deren Herstellung, wie sie im Rahmen des nachfolgenden Textes beschrieben sind.

Gegenstand der vorliegenden Erfindung ist daher eine Stabilisatorzusammensetzung, mindestens enthaltend ein Salz einer halogenhaltigen Oxysäure der allgemeinen Formel M(ClO₄)ₖ, wobei M für Li, Na, K, Mg, Ca, Sr, Zn, Al, La, Ce oder ein Ammoniumkation der allgemeinen Formel NR₄⁺ steht, die Reste R unabhängig voneinander für H oder einen linearen oder verzweigten Alkylrest mit 1 bis etwa 10 C-Atomen und k entsprechend der Wertigkeit von M für die Zahl 1, 2 oder 3 steht, und eine anorganische oder organische Säure oder eine anorganische Base, wobei die Zusammensetzung, bezogen auf den Gesamtgehalt an Salz einer halogenhaltiger Oxysäure weniger als 10 % Kristallite des Salzes mit einer Kristallitgröße von mehr als 3 µm enthält.

Unter einer "Stabilisatorzusammensetzung" wird im Rahmen der vorliegenden Erfindung eine Zusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich eine erfindungsgemäße Stabilisatorzusammensetzung dem zu stabilisierenden, halogenhaltigen Polymeren während der Verarbeitung beizumischen.

Eine erfindungsgemäße Stabilisatorzusammensetzung weist mindestens zwei Bestandteile auf. Als einen ersten Bestandteil enthält eine erfindungsgemäße Stabilisatorzusammensetzung mindestens ein Salz einer halogenhaltigen Oxysäure der allgemeinen Formel M(ClO₄)ₖ, wobei M für Li, Na, K, Mg, Ca, Sr, Zn, Al, La, Ce oder ein Ammoniumkation der allgemeinen Formel NR₄⁺ steht, worin die Reste R unabhängig voneinander für H oder einen linearen oder verzweigten Alkylrest mit 1 bis etwa 10 C-Atomen stehen. Der Index k steht entsprechend der Wertigkeit von M für die Zahl 1, 2 oder 3.

Beispielsweise kann eine erfindungsgemäße Stabilisatorzusammensetzung nur ein Salz einer halogenhaltigen Oxysäure enthalten. Es ist jedoch im Rahmen der vorliegenden Erfindung ebenso möglich und vorgesehen, dass eine erfindungsgemäße Stabilisatorzusammensetzung ein Gemisch aus zwei oder mehr Salzen halogenhaltiger Oxysäuren enthält. Im Rahmen einer bevorzugten Ausführungsform der vorliegenden Erfindung enthält eine erfindungsgemäße Stabilisatorzusammensetzung Natriumperchlorat.

Der Anteil an Salzen einer halogenhaltigen Oxysäure oder eines Gemischs aus zwei oder mehr halogenhaltigen Oxysäuren an der erfindungsgemäße Stabilisatorzusammensetzung beträgt etwa 0,01 bis etwa 50 Gew.-%, insbesondere etwa 0,05 bis etwa 20 Gew.-%. Beispiele für Gehalte an Salzen einer halogenhaltigen Oxysäure oder eines Gemischs aus zwei oder mehr derartigen Salzen sind etwa 0,1 bis etwa 5 Gew.-% oder etwa 0,2 bis etwa 1,5 Gew.-%.

Die Salze der halogenhaltigen Oxysäuren kommen in einer erfindungsgemäßen Stabilisatorzusammensetzung in besonders fein verteilter Form vor. Im Rahmen einer bevorzugten Ausführungsform der vorliegenden Erfindung weisen weniger als 10 Gew.-% der Salze der halogenhaltigen Oxysäure oder des Gemischs aus zwei oder mehr solcher Salze Kristallite mit einer Größe von mehr als 3 µm auf. Daraus folgt, dass mindestens etwa 90 Gew.-% der Salze Kristallite mit einer Größe von weniger als 3 µm aufweisen.

Im Rahmen einer bevorzugten Ausführungsform der vorliegenden Erfindung weist eine erfindungsgemäße Stabilisatorzusammensetzung ein Salz einer halogenhaltigen Oxysäure oder eines Gemischs aus zwei oder mehr halogenhaltigen Oxysäuren auf, wobei weniger als etwa 10 Gew.-% des Salzes oder des Salzgemischs in Form von Kristalliten mit einer Größe von mehr als 1 µm, vorzugsweise mit einer Größe von mehr als 500 nm vorliegen. Im Rahmen einer weiteren bevorzugten Ausführungsform der vorliegenden Erfindung ist eine erfindungsgemäße Stabilisatorzusammensetzung im wesentlichen frei von Kristalliten von Salzen halogenhaltiger Oxysäuren mit einer Kristallitgröße von mehr als etwa 250 nm. Im Rahmen besonders bevorzugter Ausführungsformen der vorliegenden Erfindung enthält eine erfindungsgemäße Stabilisatorzusammensetzung Kristallite von Salzen halogenhaltiger Oxysäuren mit einer Kristallitgröße von mehr als etwa 100 nm oder mehr als etwa 50 nm oder mehr als etwa 20 nm oder mehr als etwa 10 oder etwa 5 nm.

Die Kristallitgrößen von Salzen halogenhaltiger Oxysäuren, wie sie im Rahmen des vorliegenden Textes genannt werden, lassen sich grundsätzlich durch beliebige Methoden zur Bestimmung von Partikelgrößen bestimmen. Grundsätzlich geeignet sind beispielsweise Siebverfahren, Sedimentationsverfahren oder Verfahren die auf der Beugung oder Brechung von elektromagnetische Wellen, insbesondere von Licht, beruhen. Darüber hinaus geeignet sind elektronenmikroskopische Verfahren wie die Rasterelektronenmikroskopie oder die Transmissionselektronenmikroskopie.

Im Rahmen einer weiteren bevorzugten über erfindungsgemäße Stabilisatorzusammensetzung frei von Kristalliten, wie sie durch röntgendiffraktometrische Methoden nachweisbar sind. Vorzugsweise enthält eine erfindungsgemäße Stabilisatorzusammensetzung daher Kristallite, deren Größe jenseits der Nachweisgrenze derartige Methoden liegt. Vorzugsweise liegt die Größe derartiger Kristallite unterhalb von etwa 10 Nanometern, vorzugsweise unterhalb von etwa 5 Nanometern.

Neben einem Salz einer halogenhaltigen Oxysäure oder einem Gemisch aus zwei oder mehr derartiger Salze enthält eine erfindungsgemäße Stabilisatorzusammensetzung eine anorganische oder organische Säure oder eine anorganische Base. Bei den anorganischen oder organische Säuren oder den organischen Basen handelt es sich um feste Verbindungen, welche zur Bildung von vorzugsweise festen Säure- oder Basenanhydriden fähig sind. Geeignet sind beispielsweise zur Anhydridbildung befähigte organische Säuren, beispielsweise Maleinsäure, Phthalsäure oder Bernsteinsäure.

Weiterhin geeignet sind beispielsweise zur Anhydridbildung befähigte anorganische Säuren, beispielsweise Borsäure.

Besonders als Bestandteil der erfindungsgemäßen Stabilisatorzusammensetzung geeignet sind jedoch anorganische Basen, die zur Bildung von Anhydriden befähigt sind. Geeignete anorganische Basen sind die Hydroxide der Elemente der ersten und zweiten Hauptgruppe des Periodensystems sowie die Hydroxide der Elemente der ersten Nebengruppe des Periodensystems. Besonders geeignet sind Magnesiumhydroxid, Calciumhydroxid, Bariumhydroxid oder Strontiumhydroxid.

Eine erfindungsgemäße Stabilisatorzusammensetzung kann im Rahmen der vorliegenden Erfindung beispielsweise nur eine organische oder anorganische Säure oder eine anorganische Base enthalten. Es ist im Rahmen der vorliegenden Erfindung jedoch ebenso vorgesehen, dass eine erfindungsgemäße Stabilisatorzusammensetzung ein Gemisch aus zwei oder mehr organischen Säuren oder zwei oder mehr anorganischen Säuren oder ein Gemisch aus zwei oder mehr anorganischen Basen oder ein Gemisch aus einer oder mehreren organischen Säuren oder einer oder mehreren anorganischen Säuren.

Im Rahmen einer bevorzugten Ausführungsform der vorliegenden Erfindung enthält eine erfindungsgemäße Stabilisatorzusammensetzung als anorganische Base Calciumhydroxid oder Magnesiumhydroxid, insbesondere Calciumhydroxid.

Neben den genannten Säuren oder Basen oder den Gemischen aus Säuren und Basen sowie den Salzen halogenhaltiger Oxysäuren kann eine erfindungsgemäße Stabilisatorzusammensetzung noch weitere Zusatzstoffe enthalten.

Als Zusatzstoffe geeignet sind beispielsweise Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im wesentlichen in fester Form vorliegt.

Im Rahmen einer weiteren bevorzugten Ausführungsform der vorliegenden Erfindung enthält eine erfindungsgemäße Stabilisatorzusammensetzung höchstens etwa 5 Gew.-% an flüssigem Aminoalkohol oder einem Gemisch aus zwei oder mehr flüssigen Aminoalkoholen, vorzugsweise liegt der Anteil jedoch darunter, beispielsweise bei 1 Gew.-% oder weniger. Im Rahmen einer besonders bevorzugten Ausführungsform der vorliegenden Erfindung enthält eine erfindungsgemäße Stabilisatorzusammensetzung keine flüssigen Aminoalkohole.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen, die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diarninopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amine-2,5-dimethyleyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Arninomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der allgemeinen Formel I 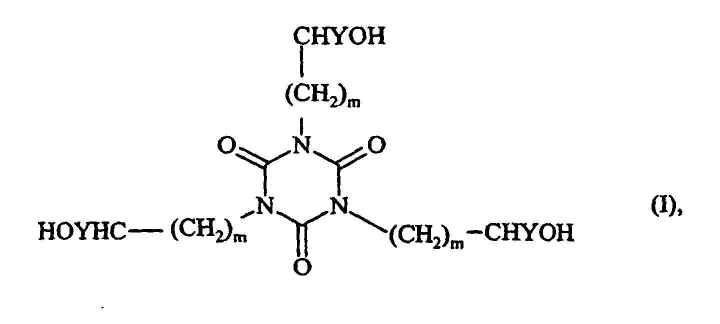 worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxymethyl)-isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Ebenfalls als Zusatzstoffe im Rahmen der vorliegenden Erfindung geeignet sind Verbindungen mit einem Strukturelement der allgemeinen Formel II 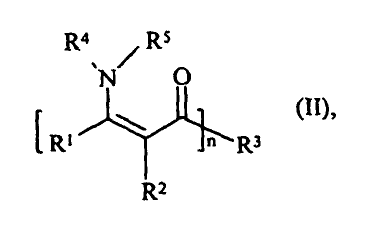 worin n für eine Zahl von 1 bis 100.000, die Reste R⁴, R⁵, R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel I, enthalten.

Im Rahmen einer bevorzugten Ausführungsform der vorliegenden Erfindung wird als Verbindung der allgemeinen Formel I eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest R³ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel II eine Verbindung eingesetzt, in der R¹ für einen linearen Alkylrest mit 1 bis 4 C-Atomen, R² für Wasserstoff und R³ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel II umfassen beispielsweise β-Aminocrotonsäurestearylester, 1,4-Butandiol-di(β-aminocrotonsäure)ester, Thio-diethanol-β-aminocrotonsäureester, Trimethylolpropan-tri-β-aminocrotonsäureester, Pentaerythrit-tetra-β-aminocrotonsäureester, Dipentaerythrit-hexa-β-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls im Rahmen der vorliegenden Erfindung als Verbindungen der allgemeinen Formel II geeignet sind Aminouracilverbindungen der allgemeinen Formel III 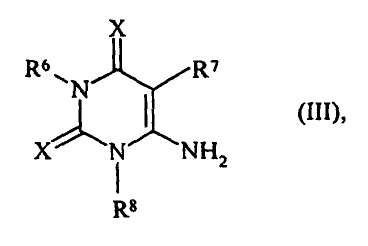 worin die Reste R⁶ und R⁷ die bereits obengenannte Bedeutung haben und der Rest R⁸ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Die Verbindung gemäß Formel III fällt damit unter die Verbindungen gemäß Formel I, wobei n in der allgemeinen Formel I für 1 und die Reste R¹ und R³ gemäß der allgemeinen Formel I zu dem Strukturelement der allgemeinen Formel IV 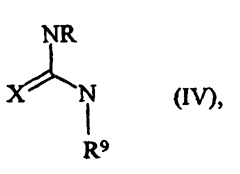 verbunden sind, worin X für S oder O steht. R¹ steht im Falle einer Verbindung der allgemeinen Formel IV also für N-R⁹, während R³ für -RN-C=X steht und beide Reste über eine N-C-Bindung kovalent zu einem heterocyclischen Ring verknüpft sind.

Vorzugsweise werden im Rahmen der vorliegenden Erfindung Verbindungen der allgemeinen Formel IV eingesetzt, bei denen R⁹ für Wasserstoff steht.

Im Rahmen einer weiteren bevorzugten Ausführungsform der vorliegenden Erfindung werden in den erfindungsgemäßen Stabilisatorzusammensetzungen Verbindungen der allgemeinen Formel III eingesetzt, bei denen R⁶ und R⁸ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen der allgemeinen Formel III eingesetzt, worin R⁶ und R⁸ für Wasserstoff, Methyl, Ethyl, n-Propyl, Isopropyl, n-, i-, sec- oder t-Butyl stehen.

Ebenfalls als Verbindungen der allgemeinen Formel I geeignet sind beispielsweise Verbindungen, in denen die Reste R¹ und R² zu einem aromatischen oder heteroaromatischen System verbunden sind, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung enthält eine erfindungsgemäße Stabilisatorzusammensetzung eine Verbindung der allgemeinen Formel I oder ein Gemisch aus zwei oder mehr Verbindungen der allgemeinen Formel I, beispielsweise eine Verbindung der allgemeinen Formel III, in einer Menge von etwa 0,1 bis etwa 99,5 Gew.-%, insbesondere etwa 5 bis etwa 50 Gew.-% oder etwa 5 bis etwa 25 Gew.-%.

Als weitere Zusatzstoffe eignen sich im Rahmen der vorliegenden Erfindung beispielsweise Verbindungen, die mindestens ein mercaptofunktionelles, sp²-hybridisiertes C-Atom aufweisen. Unter Verbindungen, die mindestens ein mercaptofunktionelles, sp²-hybridisiertes C-Atom aufweisen, werden im Rahmen der vorliegenden Erfindung grundsätzlich alle Verbindungen verstanden, die ein Strukturelement Z=CZ-SH oder ein Strukturelement Z₂C=S aufweisen, wobei beide Strukturelemente tautomere Formen einer einzigen Verbindung sein können. Das sp²-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, lfiiocarbamate, Thiocarbonsäuren, Thiobenzoesäurederivate, Thioacetonderivate oder Thioharnstoff oder Thiohamstoffderivate. Geeignete Verbindungen mit mindestens einem mercaptofunktionellen, sp²-hybridisierten C-Atom werden beispielsweise in der nicht vorveröffentlichten deutschen Patentanmeldung mit dem Aktenzeichen 101 09 366.7 genannt.

Im Rahmen einer bevorzugten Ausführungsform der vorliegenden Erfindung wird als Verbindung mit mindestens einem mercaptofunktionellen, sp²-hybridisierten C-Atom Thioharnstoff oder ein Thioharnstoffderivat eingesetzt.

Ebenfalls als Zusatzstoffe für die erfindungsgemäßen Stabilisatorzusammensetzungen eignen sich beispielsweise Carbazol oder Carbazolderivate oder Gemische aus zwei oder mehr davon.

Weiterhin als Zusatzstoffe geeignet sind beispielsweise 2,4-Pyrrolidindion oder dessen Derivate, wie sie beispielsweise in der nicht vorveröffentlichten deutschen Patentanmeldung mit dem Aktenzeichen 101 09 366.7 genannt werden.

Als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatischen Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxyprapylen)glykolen, Butan-1,4-diol, Poly(oxytetramethylen)glykolen, Pentan-1,5-diol, Hexan-1,6-diol, Hexan-2,4,6-triol, Glyzerin, 1,1,1-Trimethylolpropan, Bis-Trimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl)phthalimid oder 2,3-Epoxypropyl-4-methoxyphenylether.

Ebenfalls geeignet sind N-Glycidylverbindungen, wie sie durch Dehydrochlorierung der Reaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R'C(O)CHR"-C(O)R''', wie sie beispielsweise auf S. 5 der EP- 1 046 668 beschrieben sind, auf die insbesondere im Hinblick auf die Reste R', R" und R''' ausdrücklich bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester oder mehrkernige β-Ketoester wie sie in der EP-A 433 230 beschrieben sind, auf die ausdrücklich bezug genommen wird, oder Dehydracetsäure sowie deren Zink-, magnesium- oder Alkalisalze oder die Alkali- Erdalkali- oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.%, beispielsweise bis zu etwa 10 Gew.-% enthalten sein.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel V

M²⁺ ₍₂₊ₓ₎Al³⁺ _{(1+y)}(OH)_{(6+z)}A^{j-} ₐ[Bᵣ]^{nl} _{b}*m H₂O (V),

worin M für Calcium, Magnesium oder Zink oder Gemische aus zwei oder mehr davon, A für ein j-wertiges anorganisches oder organisches Säureanion, j für 1, 2 oder 3, B für ein von A verschiedenes anorganisches oder organisches Säureanion steht, r für eine ganze Zahl ≥ 1 steht und, sofern r >1 ist, den Polymerisationsgrad des Säureanions angibt und 1 für 1, 2 3 oder 4 steht und die Wertigkeit des Säureanions angibt, wobei für r = 1 1 für 2, 3 oder 4 steht und für r > 1 1 die Wertigkeit der einzelnen Monomereinheiten des Polyanions angibt und für 1, 2, 3 oder 4 steht und rl die Gesamtwertigkeit des Polyanions angibt und die folgenden Regeln für die Parameter x, y, a, b, r, z, und j gelten:
0 ≤ x < 0,6,
0 ≤ y< 0,4, wobei entweder x = 0 oder y = 0,
0 < a < 0,8/r und
z = 1 + 2x + 3y - ja - r/b.

Im Rahmen einer bevorzugten Ausführungsform der vorliegenden Erfindung werden als Zusatzstoffe Verbindungen der allgemeinen Formel V eingesetzt, worin M für Calcium steht, das gegebenenfalls im Gemisch mit Magnesium oder Zink oder Magnesium und Zink vorliegen kann.

In der allgemeinen Formel V steht A für ein r-wertiges anorganisches oder organisches Säureanion, wobei r für 1, 2 oder 3 steht. Beispiele für im Rahmen von erfindungsgemäß einsetzbaren Hydrocalumiten vorliegende Säureanionen sind Halogenidionen, SO₃²⁻, SO₄²⁻, S₂O₃²⁻, S₂O₄²⁻, HPO₃²⁻, PO₄³⁻, CO₃²⁻, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanionen, insbesondere ein Halogenidion, beispielsweise F⁻, Cl⁻ oder Br⁻, vorzugsweise für Cl⁻.

In der allgemeinen Formel V steht B für ein Säureanion, das von A verschieden ist. Für den Fall, dass in der allgemeinen Formel V r für die Zahl 1 steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel V vorliegende Säureanionen B sind beispielsweise O²⁻, SO₃²⁻, SO₄²⁻, S₂O₃²⁻, S₂O₄²⁻, HPO₃²⁻, PO₄³⁻, CO₃²⁻, Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel V für ein Borat oder ein Anion einer gegebenenfalls funktionalisierte Di-, Tri- oder Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall dass r in der allgemeinen Formel V für eine Zahl von mehr als 1 steht, steht der Term [Bᵣ]^{rl-} für ein anorganisches oder organisches Polyanion mit dem Polymerisationsgrad r und der Wertigkeit 1 der einzelnen Monomereinheiten des Polyanions mit der Gesamtwertigkeit rl, wobei 1 gleich oder größer als 1 ist. Beispiele für geeignete Polyanionen [Bᵣ]^{rl-} sind Polyacrylate, Polyearboxylate, Polyborate, Polysilikate, Polyphosphate oder Polyphosphonate.

In allen obengenannten Fällen können die Säureanionen A und B in einem beliebigen Verhältnis a/b in den Verbindungen der allgemeinen Formel V enthalten sein.

Bei den Verbindungen der allgemeinen Formel V handelt es sich nicht um schichtartig aufgebaute Verbindungen vom Hydrotalcit- bzw. Hydrocalumittyp, sondern um eine physikalische Mischung von M²⁺/Aluminiumoxidhydraten mit Salzen zweiwertiger Metalle. Röntgendiffraktogramme der in der erfindungsgemäßen Zusammensetzung eingesetzten Verbindungen der allgemeinen Formel V zeigen eindeutig, dass es sich nicht um diskrete kristalline Verbindungen eines bekannten Typs sondern um röntgenamorphe Mischungen handelt.

Zur Herstellung der Verbindungen gemäß der allgemeinen Formel V können, bekannten Verfahren folgend, Lösungen bzw. Suspensionen oxidischer Formen der gewünschten Kationen (z.B. NaAlO₂, Ca(OH)₂, Zn(OH)₂, Al(OH)₃) mit Lösungen oder Suspension von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250 °C getrocknet werden. Die zugesetzte Menge an Oberflächenbehandlungsmittel beträgt beispielsweise etwa 1 bis etwa 20 Gcw.-%.

Verbindungen der allgemeinen Formel V können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Im Rahmen einer weiteren Ausführungsform der vorliegenden Erfindung enthält eine erfindungsgemäße Stabilisatorzusammensetzung mindestens ein basisches Calciumsalz. Als basische Calciumsalze geeignet sind beispielsweise Calciumoxid, Calciumcarbonat oder, sofern es nicht bereits zwingender Bestandteil der erfindungsgemäßen Stabilisatorzusammensetzungen ist, Calciumhydroxid. Die basischen Calciumsalze können gegebenenfalls oberflächenmodifiziert sein.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder Blei oder Gemische aus zwei oder mehr davon, im Rahmen einer bevorzugten Ausführungsform der vorliegenden Erfindung sind die erfindungsgemäßen Stabilisatorausammensetzungen jedoch frei von Zink.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden als Zusatzstoffe Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren bevorzugten Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gew.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercapto-propionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctyl-zinn-bis-(isooctyl-thioglycolat), Monooctylzinn-tris-(isooctyl-thioglycolat) oder Dimethyl-zinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die obengenannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.-%, insbesondere bis etwa 10 Gew.-%, enthalten.

Eine erfindungsgemäße Stabilisatorzusammensetzung kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden Textes verstanden.

Eine erfindungsgemäße Stabilisatorzusammensetzung kann die beschriebenen blockierten Mercaptane in einer Menge von bis zu etwa 30 Gew.-%, insbesondere bis zu etwa 10 Gew.%, enthalten.

Eine erfindungsgemäße Stabilisatorzusammensetzung kann weiterhin Gleitmittel wie Paraffinwachse, Polyethylenwachse, Polypropylenwachse, Montanwachse, Estergleitmittel wie Fettsäureester, gereinigte oder hydrierte natürliche oder synthetische Triglyceride oder Partialester, Amidwachse, Chlorparaffine, Glyzerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet. Besonders geeignet sind im Rahmen der vorliegenden Erfindung Gleitmittel der Produktreihe Baerolub® der Firma Baerlocher GmbH (Unterschleißheim, Deutschland).

Eine erfindungsgemäße Stabilisatorzusammensetzung kann die beschriebenen Gleitmittel in einer Menge von bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyl-trimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.-%, 2 Gew.-% oder 5 Gew.%.

Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba, Sb)O₂, Cr₂O₃, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Bevorzugt werden im Rahmen der vorliegenden Erfindung als Antioxidantien die Produkte der Irganox®-Reihe (Hersteller: Ciba Specialty Chemicals), beispielsweise Irganox® 1010 oder 1076 oder Produkte der Lowinox-Reihe der Fa. Great Lakes eingesetzt.

Geeignete UV-Absorber und Lichtschutzmittel werden in der EP-A 1 046 668 auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Zur Herstellung der erfindungsgemäßen Stabilisatorzusammensetzung wird eine wässrige Lösung eines Salzes einer halogenhaltige Oxysäure oder eines Gemischs aus zwei oder mehr solcher Salze mit einem anorganischen oder organischen Säureanhydrid oder einem anorganischen Basenanhydrid umgesetzt.

Gegenstand der vorliegenden Erfindung ist daher auch ein Verfahren zur Herstellung einer Stabilisatorzusammensetzung für halogenhaltige Polymere, bei dem eine wässrige Lösung einer halogenhaltigen Oxysäure, oder eines Gemischs aus zwei oder mehr halogenhaltigen Oxysäuren, mit einem anorganischen oder organischen Säureanhydrid oder einem anorganischen Basenanhydrid oder einem Gemisch aus zwei oder mehr davon, zu einem Reaktionsprodukt umgesetzt wird.

Hierzu wird im Rahmen einer ersten Ausführungsform der vorliegenden Erfindung ein anorganisches oder organisches Säureanhydrid oder ein anorganisches Basenanhydrid oder ein Gemisch aus zwei oder mehr anorganischen oder organischen Säureanhydriden oder ein Gemisch aus zwei oder mehr anorganischen Basenanhydriden in Pulverform vorgelegt. Das erfindungsgemäße Verfahren kann jedoch ebenso mit einem ein Gemisch aus einem oder mehreren anorganischen Säureanhydriden und einem oder mehreren anorganischen Basenanhydriden durchgeführt werden.

Die im Rahmen des erfindungsgemäßen Verfahrens eingesetzten Pulver weisen dabei vorzugsweise eine durchschnittliche Partikelgröße von weniger als etwa 100 µm, vorzugsweise weniger als etwa 60 µm und insbesondere weniger als etwa 40 µm auf.

Zur Durchführung des erfindungsgemäßen Verfahrens wird eine der obengenannten Anhydridverbindungen oder eines der obengenannten Gemische mit einer wässrigen Lösung eines Salzes einer halogenhaltigen Oxysäure oder eines Gemischs aus zwei oder mehr solcher Salze umgesetzt. Die Umsetzung wird im Rahmen des erfindungsgemäßen Verfahrens so durchgeführt, dass das Anhydrid mit dem zugeführten Wasser der wässrigen Lösung des halogenhaltigen Salzes der Oxysäure oder des Gemischs aus zwei oder mehr dieser Säuren, zu der jeweiligen Säure oder Base reagiert.

Die während der Umsetzung herrschenden Bedingungen können dabei im wesentlichen beliebig gewählt werden, solange durch das Wasser der wässrige Lösung eine Umsetzung des jeweiligen Anhydrids erfolgt. Beispielsweise können bei der Umsetzung Temperaturen von etwa 0 bis etwa 100 °C, insbesondere Temperaturen von etwa 20 bis etwa 80 °C herrschen.

Im Rahmen einer bevorzugten Ausführungsform der vorliegenden Erfindung werden die an der Umsetzung beteiligten Komponenten so ausgewählt, dass die Umsetzung im wesentlichen bei Raumtemperatur durchgeführt werden kann.

Es ist dabei erfindungsgemäß jedoch vorgesehen, dass die Temperatur während der Umsetzung, beispielsweise durch einen exothermen Charakter der Umsetzung selbst, ansteigt.

Die Umsetzung der pulverförmigen Komponente mit der wässrigen Lösung kann grundsätzlich auf beliebige Weise geschehen, sofern für eine ausreichende Durchmischung von Pulver und wässrige Lösung besorgt wird. Geeignet zur Durchführung des erfindungsgemäßen Verfahrens sind beispielsweise übliche Mischvorrichtungen wie Besenmischer oder Pflugscharmischer. Besonders geeignet sind jedoch Verfahren, zu einer besonders feinen Verteilung der miteinander reagierenden Verbindungen führen, beispielsweise Wirbelschichtverfahren, Sprühturmverfahren oder Jet-Strahl-Verfahren.

Das erfindungsgemäße Verfahren kann beispielsweise auch als Kombination von Misch- und Mahlverfahren durchgeführt werden. In diesem Fall kann beispielsweise während der Vermahlung eines Anhydrids oder eines Gemischs aus zwei oder Anhydriden, wie oben beschrieben, eine wässrige Lösung eines Salzes einer halogenhaltige Oxysäure oder eines Gemischs aus zwei oder mehr solcher Salze im Rahmen des Mahlvorgangs zugeführt werden.

Wenn eine erfindungsgemäße Stabilisatorzusammensetzung neben den beiden Hauptkomponenten noch einen oder mehrere Zusatzstoffe enthalten soll, so können diese Zusatzstoffe vor, während oder nach der Umsetzung der wässrigen Lösung mit dem Anhydrid oder den Anhydriden der Stabilisatorzusammensetzung zugegeben werden. Eine Zugabe von Zusatzstoffen vor oder während der Umsetzung sollte nur dann erfolgen, wenn die Zusatzstoffe gegenüber den an der Umsetzung beteiligten Verbindungen inert sind. Im anderen Fall, nämlich wenn die Zusatzstoffe nicht inert sind, werden sie, sofern die erfindungsgemäße Stabilisatorzusammensetzung solche Zusatzstoffe enthalten soll, erst nach der Umsetzung zugegeben.

Im Rahmen einer bevorzugten Ausführungsform der vorliegenden Erfindung werden zur Durchführung der erfindungsgemäßen Verfahrens die Anhydridkomponenten und die wässrige Lösung in einem molaren Verhältnis von Anhydrid : Wasser wie 1:1 oder größer als 1:1, beispielsweise 1,1 : 1 bis etwa 1,5 : 1 eingesetzt.

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Ein weiterer Gegenstand der vorliegenden Erfindung betrifft daher eine Polymerzusammensetzung, mindestens enthaltend ein halogeniertes Polymeres und eine erfindungsgemäße Stabilisatorzusammensetzung.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die vorliegende Erfindung betrifft auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäße Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung, als trockenen Mischung, als Lösung oder Schmelze zuzusetzen.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von hart- oder weich-PVC, insbesondere zur Herstellung von PVC-U.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfaßt im Rahmen der vorliegenden Erfindung grundsätzlich alle dreidimensionalen Gebilde, die aus einer erfindungsgemäße Polymerzusammensetzung herstellbar sind. Der Begriff "Formkörper" umfaßt im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten., Coextrudate mit recyceltem Kern oder Gehäuse für elektrische Apparaturen oder Maschinen, beispielsweise Computer oder Haushaltsgeräte.

Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Die Erfindung wird nachfolgend durch Beispiele näher erläutert.

### Beispiele

1. 7,14 g einer wässrigen Lösung von 70 Gew.-% Natriumperchlorat in Wasser wurden mit 45 g Calciumhydroxid (Teilchengröße D₅₀: 6,5 µm) vermischt und das Gemisch anschließend getrocknet (Kombination 3). Eine elektronenmikroskopische Untersuchung des getrockneten Gemischs zeigte Kristallite mit einer Größe von bis zu 10 µm. Durch die Aufnahme eines Röntgendiffraktogramms (Cu/K-α-Strahlung) des Gemischs konnte durch einen Reflex bei 2 Theta = 25,14° die Anwesenheit von kristallinem Natriumperchlorat nachgewiesen werden.
2. 7,14 g einer wässrigen Lösung von 70 Gew.-% Natriumperchlorat in Wasser wurden mit einer Mischung von 6,66 g Calciumoxid (Teilchengröße D₅₀: 14,5 µm) und 36,2 g Calciumhydroxid (Teilchengröße D₅₀: 6,5 µm) umgesetzt (Kombination 1). Eine elektronenmikroskopische Untersuchung des Gemischs konnte keine eindeutigen Kristallite von Natriumperchlorat nachweisen. Die Aufnahme eines Röntgendiffraktogramms zeigte keinen Reflex bei 2 Theta = 25,14°, wodurch die Abwesenheit von kristallinem Natriumperchlorat mit einer Kristallitgröße von mehr als 5 nm nachgewiesen werden konnte.

Zur Überprüfung der Wirksamkeit der erfindungsgemäßen Stabilisatorzusammensetzungen wurden eine erfindungsgemäße Rezeptur und zwei Vergleichsrezepturen (Rezepturen 2 und 3) angefertigt und deren Wirksamkeit überprüft. Als Kombination 2 kam eine Mischung von Natriumperchlorat und Calciumhydroxid zum Einsatz, die durch trockenes Vermischen der beiden Bestandteile erhalten wurde. Die Teilchengröße der in Kombination 2 enthaltenen Bestandteile Calciumhydroxid und Natriumperchlorat betrug jeweils etwa 6,4 und etwa 15 µm.
Folgende Rezepturen kamen zum Einsatz:

| | Rezeptur 1 | Rezeptur 2 | Rezeptur 3 |
|---|---|---|---|
| | | | |
| PVC | 100 | 100 | 100 |
| Kreide | 2,1 | 2,1 | 2,1 |
| Titandioxid | 0,1 | 0,1 | 0,1 |
| Calciumstearat (Ceasit SW) | 0,5 | 0,5 | 0,5 |
| Paraffinwachs (z.B. BL* LKT) | 0,6 | 0,6 | 0,6 |
| PE-Wachs (z. B. BL* PA) | 0,5 | 0,5 | 0,5 |
| oxidiertes PE-Wachs (z. B. BL* PA 25) | 0,1 | 0,1 | 0,1 |
| Calciumhydroxid | 0,2 | 0,2 | 0,2 |
| Hydrocalumit | 0,6 | 0,6 | 0,6 |
| BGAC | 0,3 | 0,3 | 0,3 |
| Kombination 1 | 0,2 | | |
| Kombination 2 | | 0,2 | |
| Kombination 3 | | | 0,2 |
| | | | |

| | | | |
|---|---|---|---|
| * BL = Baerolub | | | |

Aus PVC und den oben genannten Rezepturen wurden jeweils Walzfelle bei 190°C (Walzzeit 3 Minuten) hergestellt. Mit den erhaltenen PVC-Fellen wurden Kongo-Rot-Test nach DIN VDE 0472 Teil 614 und Hitzestabilität im Mathis-Ofen bei 200°C und Vorschub alle 5 Minuten mit anschließender qualitativer visueller Beurteilung. Dabei wurden folgende Ergebnisse erhalten:

| | Rezeptur | 1 Rezeptur 2 | Rezeptur 3 |
|---|---|---|---|
| Kongo-Rot-Test | 24 Minuten | 19 Minuten | 22 Minuten |
| Farbhaltung im Mathis Test | 1 | 3 | 2 |
| Anfangsfarbe | 1 | 1 | 2 |
| 1 = beste Note | | | |
| 6 = schlechteste Note | | | |

## Patentansprüche

1. Stabilisatorzusammensetzung, mindestens enthaltend ein Salz einer halogenhaltigen Oxysäure der allgemeinen Formel M(ClO₄)ₖ, wobei M für Li, Na, K, Mg, Ca, Sr, Zn, Al, La, Ce oder ein Ammoniumkation der allgemeinen Formel NR₄⁺ steht, die Reste R unabhängig voneinander für H oder einen linearen oder verzweigten Alkylrest mit 1 bis etwa 10 C-Atomen und k entsprechend der Wertigkeit von M für die Zahl 1, 2 oder 3 steht, und eine anorganische oder organische Säure oder eine anorganische Base, wobei die Zusammensetzung, bezogen auf den Gesamtgehalt an Salz einer halogenhaltiger Oxysäure weniger als 10 % Kristallite des Salzes mit einer Kristallitgröße von mehr als 3 µm enthält.

2. Stabilisatorzusammensetzung nach Anspruch 1, **dadurch gekennzeichnet, dass** sie, bezogen auf den Gesamtgehalt an Salz einer halogenhaltigen Oxysäure, weniger als 10 Gew.-% Kristallite des Salzes der halogenhaltigen Oxysäure mit einer Kristallitgröße von mehr als 100 nm enthält.

3. Stabilisatorzusammensetzung nach Anspruch 1 oder 2, **dadurch gekennzeichnet**, das sie ein Erdalkalihydroxid enthält.

4. Stabilisatorzusammensetzung nach einem der Ansprüche 1 bis 3, **dadurch gekennzeichnet, dass** sie noch mindestens einen weiteren Zusatzstoff enthält.

5. Verfahren zur Herstellung einer Stabilisatorzusammensetzung für halogenhaltige Polymere, bei dem eine wässrige Lösung einer halogenhaltigen Oxysäure, oder eines Gemischs aus zwei oder mehr halogenhaltigen Oxysäuren, mit einem anorganischen oder organischen Säureanhydrid oder einem anorganischen Basenanhydrid oder einem Gemisch aus zwei oder mehr davon, zu einem Reaktionsprodukt umgesetzt wird.

6. Verfahren nach Anspruch 5, **dadurch gekennzeichnet, dass** bei der Umsetzung eine anorganische Base entsteht.

7. Verfahren nach Anspruch 5 oder 6, **dadurch gekennzeichnet, dass** die wässrige Lösung mindestens 10 Gew.-% der Salze der halogenhaltigen Oxysäure oder des Gemischs aus zwei oder mehr Salzen der halogenhaltigen Oxysäuren enthält.

8. Verfahren nach einem der Ansprüche 5 bis 7, **dadurch gekennzeichnet, dass** bei der Umsetzung bezogen auf den Gesamtgehalt an halogenhaltiger Oxysäure, weniger als 10 Gew.-% Kristallite der Salze der halogenhaltigen Oxysäure mit einer Kristallitgröße von mehr als 200 nm, bezogen auf den Gesamtgehalt an Salzen der halogenhaltiger Oxysäure, entstehen.

9. Verfahren nach einem der Ansprüche 5 bis 8, **dadurch gekennzeichnet, dass** das Reaktionsprodukt mit einem oder mehreren Zusatzstoffen vermischt wird.

10. Polymerzusammensetzung, mindestens enthaltend ein halogenhaltiges Polymeres und eine Stabilisatorzusammensetzung gemäß einem der Ansprüche 1 bis 4 oder eine gemäß einem Verfahren nach einem der Ansprüche 5 bis 9 hergestellte Stabilisatorzusammensetzung.

## Claims

1. Stabiliser composition, at least comprising a salt of a halogen-containing oxy acid of the general formula M(ClO₄)ₖ, wherein M is Li, Na, K, Mg, Ca, Sr, Zn, Al, La, Ce or an ammonium cation of the general formula NR₄⁺, wherein the radicals R are, independent from each other, hydrogen or a linear or branched alkyl radical having from 1 to about 10 carbon atoms and k, corresponding to the valency of M, is 1, 2 or 3, and an inorganic or organic acid or an inorganic base, where the composition, based on the total content of salt of a halogen-containing oxy acid, contains less than 10 % crystallites of the salt having a crystallite size of more than 3 µm.

2. Stabiliser composition according to claim 1, **characterised in that** it contains, based on the total content of salt of a halogen-containing oxy acid, less than 10 % by weight crystallites of the salt of the halogen-containing oxy acid having a crystallite size of more than 100 nm.

3. Stabiliser composition according to claim 1 or 2, **characterised in that** it comprises an alkaline earth metal hydroxide.

4. Stabiliser composition according to any one of claims 1 to 3, **characterised in that** it also comprises at least one further additive.

5. Process for the preparation of a stabiliser composition for halogen-containing polymers, wherein an aqueous solution of a halogen-containing oxy acid, or a mixture of two or more halogen-containing oxy acids, is reacted with an inorganic or organic acid anhydride or an inorganic base anhydride, or with a mixture of two or more thereof, to form a reaction product.

6. Process according to claim 5, **characterised in that** an inorganic base is formed during the reaction.

7. Process according to claim 5 or 6, **characterised in that** the aqueous solution comprises at least 10 % by weight of the salts of the halogen-containing oxy acid or of the mixture of two or more salts of the halogen-containing oxy acids.

8. Process according to any one of claims 5 to 7, **characterised in that** based on the total content of halogen-containing oxy acid, less than 10 % by weight of crystallites of the salts of the halogen-containing oxy acid having a crystallite size of more than 200 nm, based on the total content of salts of the halogen-containing oxy acid, are formed during the reaction.

9. Process according to any one of claims 5 to 8, **characterised in that** the reaction product is mixed with one or more additives.

10. Polymer composition, at least comprising a halogen-containing polymer and a stabiliser composition according to any one of claims 1 to 4 or a stabiliser composition prepared by a process according to any one of claims 5 to 9.

## Revendications

1. Composition stabilisatrice contenant au moins un sel d'un acide oxygénique halogéné de formule générale M(ClO₄)ₖ, dans laquelle M est Li, Na, K, Mg, Ca, Sr, Zn, Al, La, Ce ou un cation d'ammonium de formule générale NR₄⁺, dans laquelle les substituents R sont indépendamment l'un de l'autre l'hydrogène ou un groupe alkyle linéaire ou ramifié avec 1 à environ 10 atomes de carbone et k est équivalent à la valence de M et peut être le nombre 1, 2 ou 3, et un acide inorganique ou organique ou une base inorganique, la composition contenant, par rapport à la teneur entière en sel d'un acide oxygénique halogéné, moins de 10 % de crystallites du sel avec une taille de crystallite de plus de 3 µm.

2. Composition stabilisatrice selon la revendication 1, **caractérisée en ce qu'**elle contient, par rapport à la teneur entière en sel d'un acide oxygénique halogéné, moins de 10 % en poids de crystallites du sel de l'acide oxygénique halogéné avec une taille de crystallite de plus de 100 nm.

3. Composition stabilisatrice selon la revendication 1 ou 2, **caractérisée en ce qu'**elle contient un hydroxyde alcalinoterreux.

4. Composition stabilisatrice selon l'une des revendications 1 à 3, **caractérisée en ce qu'**elle contient encore au moins un autre additif.

5. Procédé de préparation d'une composition stabilisatrice pour des polymères halogénés, dans lequel une solution aqueuse d'un acide oxygénique halogéné, ou d'une mélange de deux ou plusieurs acides oxygéniques halogénés est transformée en un produit réactionnel avec un anhydride d' un acide inorganique ou organique ou un anhydride basique inorganique ou un mélange de deux ou plus d'anhydrides.

6. Procédé selon la revendication 5, **caractérisé en ce qu'**une base inorganique est formée pendant la transformation.

7. Procédé selon la revendication 5 ou 6, **caractérisé en ce que** la solution aqueuse contient au moins 10 % en poids des sels de l'acide oxygénique halogéné ou du mélange de deux ou plusieurs sels des acides oxygéniques halogénés.

8. Procédé selon l'une des revendications 5 à 7, **caractérisé en ce que** pendant la transformation, par rapport à la teneur entière en acide oxygénique halogéné, moins de 10 % en poids de crystallites des sels de l'acide oxygénique halogéné avec une taille de crystallite de plus de 200 nm, par rapport à la teneur entière en sels de l'acide oxygénique halogéné, sont formés.

9. Procédé selon l'une des revendications 5 à 8, **caractérisé en ce que** le produit réactionnel est mélangé avec un ou plusieurs additifs.

10. Composition de polymère comportant au moins un polymère halogéné et une composition stabilisatrice selon l'une des revendications 1 à 4 ou une composition stabilisatrice préparée selon l'une des revendications 5 à 9.
